# EUROPEAN PATENT APPLICATION

(11) **EP 1 792 548 A2**
(43) Date of publication of application: **06.06.2007**
(21) Application number: 06011063.2
(22) Date of filing: 30.05.2006
(51) Int. Cl.: A45C 3/04, A45C 13/02, B62B 3/18, F25D 3/08, A45C 11/20, A45C 13/26

(54) **Bag made of flexible material, applicable to shopping carts**

(30) Priority: 02.12.2005 IT MI20052315
(71) Applicant: Berni Irio & C. S.N.C., 42045 Luzzara RE (IT)
(72) Inventor: Berni, Nicola, 42045 Luzzara (Prov. of Reggio Emilia) (IT)
(74) Representative: Alagem Modiano, Lara S.

(57) **Abstract**

A bag (1) made of flexible material applicable to shopping carts, comprising a container body (2) made of flexible material with an inlet (3) which has, on mutually opposite edges of the inlet, grip elements (4) which form means (5,6,7) for suspended coupling to a shopping cart; the bag further comprises, in the container body (2), at least one compartment (20) which is delimited by thermally insulating walls and is provided with opening and closure means.

## Description

The present invention relates to a bag made of flexible material, applicable to shopping carts.

As is known, bags made of flexible material are already commercially available which are provided so that they can be hooked onto the edges of a cart and have a container body which forms a mouth or inlet, which remains in the open position when the bag is connected to the cart, so as to make it easier to insert the purchased goods.

Bags are also known which are structured so as to provide thermal insulation for frozen products or for other fresh products, and bags are likewise known which have compartments which allow a functional placement of bottles, flasks and the like.

Currently, in order to comprise the features described above it is necessary to have a number of bags separately, with obvious difficulties as regards functional use.

The aim of the invention is to solve the problems described above by providing a bag made of flexible material, applicable to shopping carts, which allows a particularly functional containment of products of different types while allowing to keep the purchased products correctly positioned and separated.

Within this aim, an object of the invention is to provide a bag which allows easy transport of products, possibly even bulky ones, with the additional advantage of easily closing the bag in order to prevent the accidental escape of the products.

Another object of the present invention is to provide a bag made of flexible material applicable to shopping carts which, thanks to its particular constructive features, is capable of giving the greatest assurances of reliability and safety in use.

Another object of the present invention is to provide a bag made of flexible material which can be easily obtained starting from commonly commercially available elements and materials and is also competitive from a merely economical standpoint.

This aim and these and other objects, which will become better apparent hereinafter, are achieved by a bag made of flexible material applicable to shopping carts, according to the invention, comprising a container body made of flexible material with an inlet which has, on mutually opposite edges of said inlet, grip elements which form means for suspended coupling to a shopping cart, characterized in that it comprises, in said container body, at least one compartment which is delimited by thermally insulating walls and is provided with opening and closure means.

Further characteristics and advantages of the present invention will become better apparent from the description of a preferred but not exclusive embodiment of a bag made of flexible material applicable to shopping carts, illustrated by way of non-limiting example in the accompanying drawings, wherein:

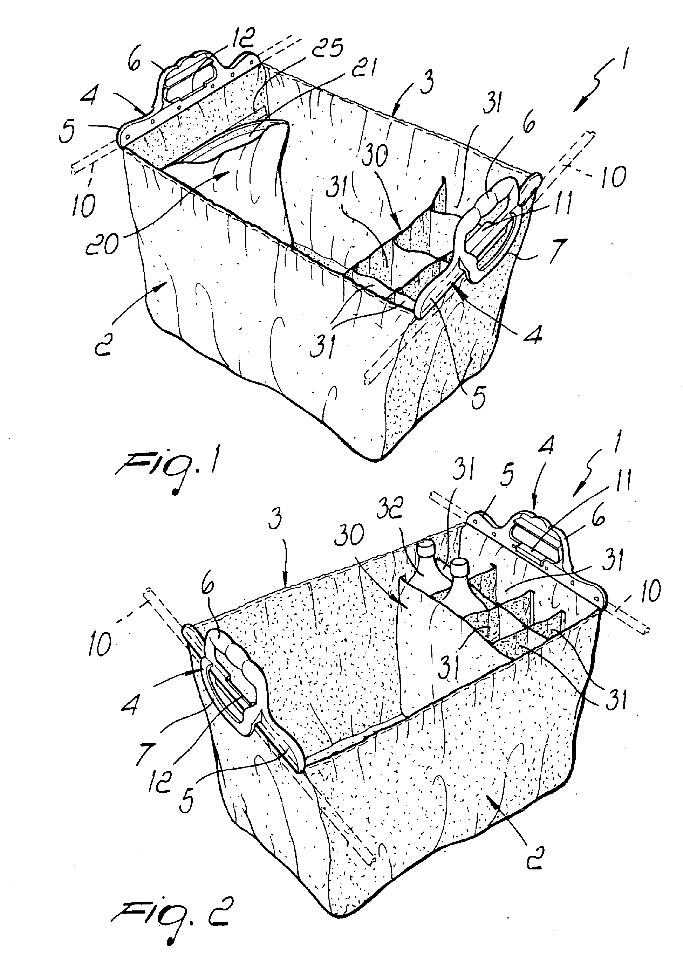

Figure 1 is a side perspective view of the bag according to the invention;
Figure 2 is a perspective view of the bag, taken from the other side;

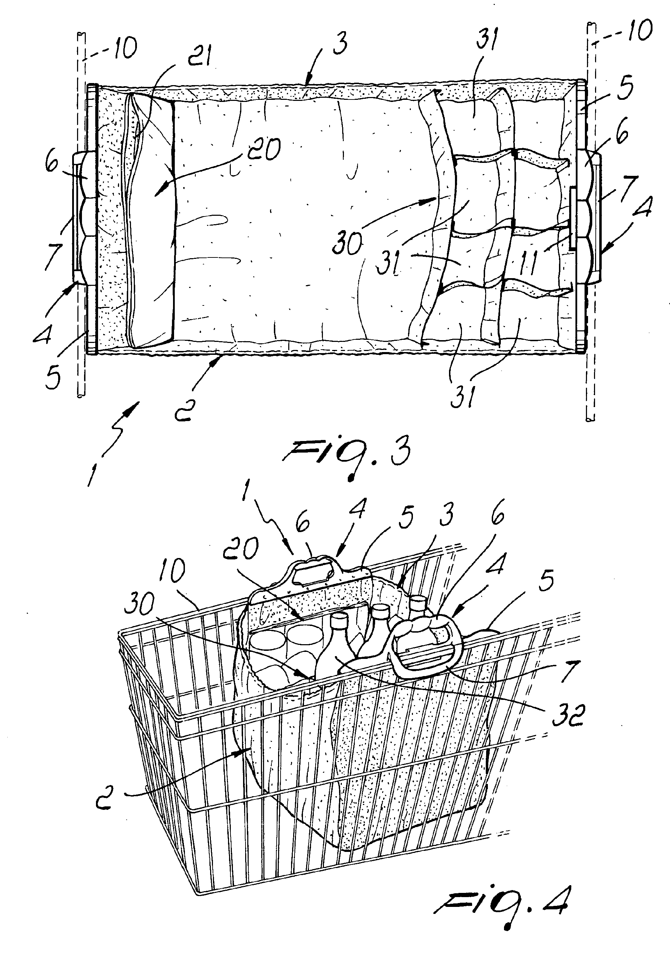

Figure 3 is a view of the bag in the open position;
Figure 4 is a view of the bag, inserted schematically in a cart in the position for use.

With reference to the figures, the bag made of flexible material applicable to shopping carts, according to the invention, generally designated by the reference numeral 1, comprises a container body 2, which is advantageously made of flexible material, such as fabric or the like, and has a mouth or inlet, generally designated by the reference numeral 3, which has grip elements 4 on mutually opposite edges.

The grip elements 4 have an elongated bar 5, from which a handle 6 protrudes upwardly and, laterally, a wing 7, which can straddle the edge of a cart, generally designated by the reference numeral 10.

Closure means are further provided on the grip elements and are constituted by a hook-shaped portion 11, which is formed on a grip element 4 and engages in a corresponding seat 12 formed on the opposite grip element.

A particular characteristic of the invention consists in that it comprises, within the container body 2, at least one compartment 20, which is provided with thermally insulating walls and is made of expanded material and the like, so as to obtain a region for the correct placement of frozen products or other products to be preserved thermally.

The compartment 20 has opening and closure means, which in the specific example are constituted by a hook-and-loop tape 21, but which obviously may be replaced with any other element.

The compartment 20 can be connected stably to the container body or optionally, as shown schematically in the drawing, it is possible to provide detachable connection means, which for example are constituted by a hook-and-loop tape 25, for example of the type known commercially by the registered trade name Velcro.

It is of course possible to provide buttons, a zip fastener or any other element that allows to provide the detachable connection.

Another important aspect of the invention further consists in that inside the container body 2 there is a region with sectors, generally designated by the reference numeral 30, which is provided by means of sheet-like elements, such as fabric and the like, which are sewn together so as to form a plurality of cells 31, which allow to accommodate bottles, flasks or the like 32, keeping them correctly in position.

The region with sectors 30 also can be stably connected to the container body or optionally can be connected by way of means that allow its removal.

From what has been described above, it is therefore evident that the invention achieves the proposed aim and objects, and in particular the fact is stressed that a bag made of flexible material is provided which can be easily connected to a cart and is provided internally with regions which are already preset to contain frozen products or in any case products that must be kept thermally controlled and bottles which are mutually separated and correctly accommodated, so as to avoid collisions and damage.

Moreover, the bag described above, once removed from the cart, can be closed easily, by utilizing the presence of the hook-like element 11 provided on the handle, which mates within the seat 12 formed on the opposite handle.

From what has been described above, it is therefore evident that the invention achieves the proposed aim and objects, and in particular attention is called again to the extreme functionality of the bag, which by being made of flexible material occupies very small spaces when not in use and allows to contain distinct products separately, thus allowing to improve preservation characteristics.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements.

The disclosures in Italian Patent Application No. MI2005A002315 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A bag made of flexible material applicable to shopping carts, comprising a container body made of flexible material with an inlet which has, on mutually opposite edges of said inlet, grip elements which form means for suspended coupling to a shopping cart, **characterized in that** it comprises, in said container body, at least one compartment which is delimited by thermally insulating walls and is provided with opening and closure means.

2. A bag made of flexible material applicable to shopping carts, comprising a container body made of flexible material with an inlet which has, on mutually opposite edges of said inlet, grip elements which form means for suspended coupling to a shopping cart, **characterized in that** it comprises, in said container body, a region with sectors provided with partitions for accommodating bottles, flasks and the like.

3. A bag made of flexible material applicable to shopping carts, comprising a container body made of flexible material with an inlet which has, on mutually opposite edges of said inlet, grip elements which form means for suspended coupling to a shopping cart, **characterized in that** it comprises, in said container body, at least one compartment which is delimited by thermally insulating walls and is provided with opening and closure means, and a region with sectors provided with partitions for accommodating bottles, flasks and the like.

4. The bag according to one or more of the preceding claims, **characterized in that** said grip elements have an elongated bar from which a handle protrudes upwardly and, laterally, a wing which can be arranged so as to straddle the edge of a cart.

5. The bag according to one or more of the preceding claims, **characterized in that** it comprises, on said grip elements, closure means, constituted by a hook-shaped portion which is formed on one of the grip elements and can be coupled detachably in a seat formed on the other one of the grip elements.

6. The bag according to one or more of the preceding claims, **characterized in that** said means for opening and closing said compartment comprise a hook-and-loop tape.

7. The bag according to one or more of the preceding claims, **characterized in that** said opening and closure means comprise a zip fastener.

8. The bag according to one or more of the preceding claims, **characterized in that** said compartment delimited by thermally insulating walls can be connected detachably to said container body.

9. The bag according to one or more of the preceding claims, **characterized in that** said region with sectors is associated detachably with said container body.

10. The bag according to one or more of the preceding claims, **characterized in that** said region with sectors with partitions has a plurality of cells for accommodating bottles, flasks and the like, which are formed by portions of flexible plate-like elements.
